# EUROPEAN PATENT SPECIFICATION

(11) **EP 2 039 600 B1**
(45) Date of publication and mention of the grant of the patent: **01.02.2012**
(21) Application number: 08164476.7
(22) Date of filing: 17.09.2008
(51) Int. Cl.: B62J 99/00, B62J 11/00, B62J 17/00

(54) **Motorcycle**
Motorrad
Motocyclette

(30) Priority: 19.09.2007 JP 2007242857
(43) Date of publication of application: 25.03.2009
(73) Proprietor: HONDA MOTOR CO., LTD., Tokyo (JP)
(72) Inventor: Okada, Naoki, Wako-shi, SAITAMA Saitama (JP); Ito, Mamoru, Wako-shi, SAITAMA Saitama (JP); Yano, Kengo, Wako-shi, SAITAMA Saitama (JP)
(74) Representative: Quinterno, Giuseppe

(56) References cited:
- EP-A- 0 751 063
- JP-A- 2001 010 567
- JP-A- 2005 088 798
- TW-B- 269 737

## Description

The present invention relates to an improvement of a motorcycle provided with a rear spoiler at a rear portion of a vehicle body frame, of the kind defined in the preamble of claim 1.

TW-269 737 B discloses a motorcycle according to the preamble of claim 1, with a rear spoiler provided with a rear grip structure forming two transversely staggered handgrips on each side, provided with respective coating layers.

JP-2005088798-A discloses a motorcycle with a rear spoiler wherein terminal lower edges of spoiler base walls form lateral grips for direct engagement by the fingers of a rider or passenger.

EP-0751063-A1 discloses a motorcycle body assembly having a storage compartment under the seat and a side cover which covers the storage compartment and is provided with a grab bar.

JP-2001010567A discloses a rear seat arrangement for a motorcycle with a U-shaped grip member fixed to a support bracket connected to the frame of the motorcycle.

It is an object of the present invention to provide a motorcycle provided with a rear spoiler providing an improved easiness of gripping by a rider or passenger.

According to the invention this object is achieved by a motorcycle having the features defined in claim 1.

According to Claim 1 in a motorcycle having a rear spoiler extending rearward from a rear portion of a vehicle body frame, the rear spoiler includes a rear spoiler base attached to the vehicle body frame and a lower cover formed of resin so as to cover a lower surface of the rear spoiler base, the rear spoiler base is formed with a recess opening downward in the vicinity of an outer periphery thereof, and the lower cover is formed with a groove which is depressed toward the side of the rear spoiler base at a portion corresponding to the recess and allowing a rider or a passenger to insert his fingers in said groove.

The rear spoiler base is formed of metal and extends substantially horizontal toward the rear of a vehicle, an upper surface of the rear spoiler base is covered with an upper cover formed of resin, the lower cover and the upper cover extend to an outer peripheral portion of the rear spoiler base, the upper cover and the lower cover is joined in the vicinity of the outer peripheral portion so that the upper surface, and the lower surface and the outer peripheral portion of the rear spoiler base are covered.

According to Claim 2 the lower cover is fastened with a first fastening member from above via a through hole provided on the rear spoiler base, and the upper cover is arranged so as to cover the first fastening member.

According to Claim 3 a seat on which the rider is seated is arranged forwardly of the rear spoiler, and a front end portion of the upper cover is arranged so as to overlap with the seat when viewing the vehicle from above, the upper cover is fixed to the rear spoiler base with a second fastening member at the front end portion thereof, an engaging projection provided on the lower surface of the upper cover is arranged so as not to overlap with the seat when viewing the vehicle from above and is engaged with an engaging hole provided on the rear spoiler base.

According to Claim 4 the rear spoiler base is provided with a projection for hooking an end of a cable usable for directly fixing a personal commodity or suspending the personal commodity, the projection is arranged below the seat when viewing the vehicle from above, and the other end of the cable is fixed to the vehicle body frame side.

In the invention according to Claim 1, a rear spoiler base is formed with a recess in the vicinity of an outer periphery thereof, a lower cover is formed with a groove being depressed toward the side of the rear spoiler base at a portion corresponding to the recess and allowing a rider or a passenger to insert his fingers in said groove.

Since the recesses for gripping are formed in the vicinity of the outer periphery of the rear spoiler base and on the lower cover, the recess for allowing the rider or the like to insert his/her fingers easily into the rear spoiler base and the lower cover, so that the rider or the like is able to grip the rear spoiler easily even when the size or the thickness of the grip is increased and the easy-to-grip rear spoiler is obtained.

Since the rear spoiler base extends in substantially horizontal direction rearwardly of the vehicle, and the upper side and the lower side of the rear spoiler base are covered with the upper cover and the lower cover, so that the height of the rear spoiler may be reduced. When the height of the rear spoiler is restrained to be small, the rear spoiler may be downsized easily.

Since the rear spoiler base is formed of metal, a cross member to be provided at the rear portion of the vehicle body frame may be utilized, and a predetermined rigidity is ensured without using a specific cross member. Therefore, increase of the number of components may be restrained, and increase of the vehicle weight may also be restrained. When the rear spoiler is used as a load-carrying platform, a sufficient strength is ensured.

By covering the rear spoiler base including an outside portion of the rear spoiler base with the upper cover and the lower cover extending to the outer peripheral portion of the rear spoiler base, the rear spoiler base may be covered completely. Therefore, a sense of integrity as the rear spoiler is enhanced, so that the appearance is improved.

Since the rear spoiler base formed of metal is covered with the upper and lower covers formed of resin, the process of finishing the surface of the rear spoiler base by polishing or coating is not necessary. In this case, although the process of coating or the like on the upper and lower covers which cover the rear spoiler base is necessary, the cost required for the surface finishing for resin may be reduced in comparison with the cost required for the surface finishing process for metal. Therefore, increase in cost for the surface finishing process of the rear spoiler may be restrained.

In the invention according to Claim 2, the lower cover is fastened with a first fastening member from above via a through hole, and the upper cover is arranged so as to cover the first fastening member, a head portion of the first fastening member is not exposed above the vehicle, so that the appearance of the rear spoiler is prevented from being impaired.

In the invention according to Claim 3, a front end portion of the upper cover is arranged so as to be overlapped with the seat when viewing the vehicle from above and the upper cover is fixed to the rear spoiler base with a second fastening member at the front end portion of the upper cover.

Since the upper end portion of the upper cover which is to be covered with the seat is attached to the rear spoiler base with the second fastening member, the second fastening member provided on the upper surface of the upper cover is not exposed outward, and hence the rear spoiler is in no danger of deterioration of the appearance. Therefore, a high level of the appearance of the rear spoiler is maintained.

The engaging projection provided on the lower surface of the upper cover is arranged so as not to overlap with the seat when viewing the vehicle from above and is engaged with the engaging hole provided on the rear spoiler base. For example, by disposing a plurality of engaging projections around the seat, the upper cover is firmly fixed to the rear spoiler base.

In the invention according to Claim 4, since the rear spoiler base is formed of metal and is provided with a projection for hooking the cable which directly fixes the personal commodity or suspends the personal commodity below the seat, the projection having rigidity may be provided. By using the projection for attaching the personal commodity, the appearance of the vehicle is not impaired, and improvement of the convenience relating to the attachment of the personal commodity is achieved.

By combining the cable and the projection for hooking the one end of the cable, for example, the cable may be used as a helmet hook by hooking the helmet thereon, so that the convenience regarding to the attachment of the personal commodity may be enhanced significantly without impairing the appearance of the vehicle.

Referring now to the attached drawings:
Fig. 1 is a left side view of a motor cycle according to the invention;
Fig. 2 is an exploded perspective view of a rear spoiler of the motorcycle according to the invention;
Fig. 3 is a side view of the rear spoiler of the motorcycle according to the invention;
Fig. 4 is a drawing showing a state viewed in the direction of an arrow 4 in Fig. 3;
Fig. 5 is a cross-sectional view taken along the line 5-5 in Fig. 4;
Fig. 6 is a cross-sectional view taken along the line 6-6 in Fig. 4;
Fig. 7 is a cross-sectional view taken along the line 7-7 in Fig. 6;
Fig. 8 is a cross-sectional view taken along the line 8-8 in Fig. 4;
Fig. 9 is a cross-sectional view taken along the line 9-9 in Fig. 4;
Fig. 10 is a perspective view for explaining a personal commodity suspending mechanism of the motorcycle according to the invention;
Fig. 11 is an explanatory drawing of a cable and a cable storage provided in the personal commodity suspending mechanism;
Fig. 12 is a cross-sectional view taken along the line 12-12 in Fig. 10; and
Fig. 13 is an operational drawing for explaining the operation of Fig. 10.

A best mode for implementing the invention will be described below. In the drawing, the terms "front", "rear", "left", "right", "up" and "down" represent the direction viewed from a rider. The front, the drawings are to be viewed so that reference signs are viewed correctly.

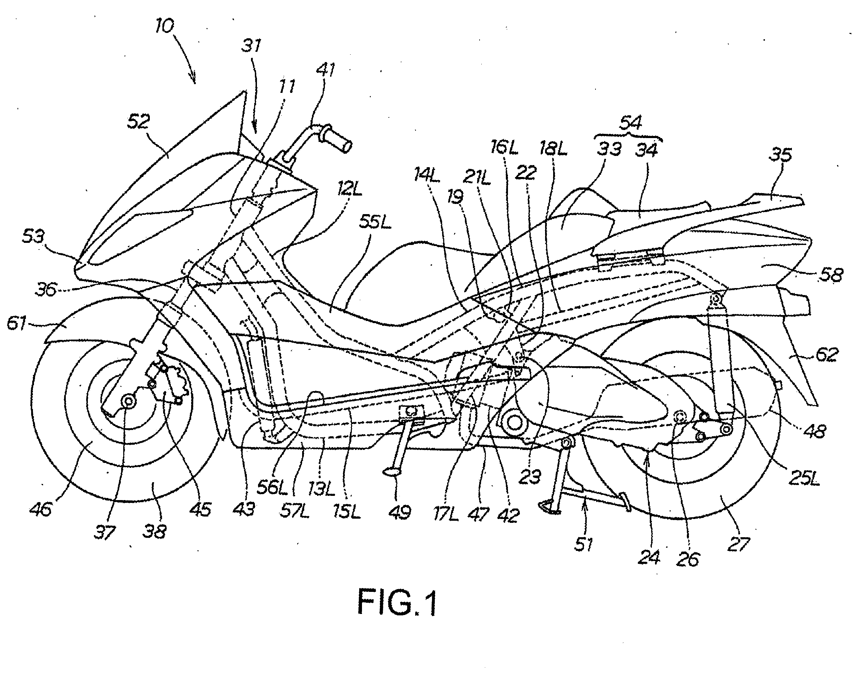

Fig. 1 is a left side view of a motorcycle according to the invention, and a motorcycle 10 as a vehicle includes main frames 12L, 12R (only the reference numeral 12L on the near side is shown) extending from the upper portion of a head pipe 11 obliquely rearward and downward, down frames 13L, 13R (only the reference numeral 13L on the near side is shown) extending from the lower portion of the head pipe 11 obliquely rearward and downward and then extending substantially downward, and finally extending rearward and being connected to the main frames 12L, 12R, stay members 15L, 15R (only the reference numeral 15L on the near side is shown) attached to these down frames 13L, 13R and arranged substantially in parallel in plan view for supporting a step floor, described later, seat rails 14L, 14R (only the reference numeral 14L on the near side is shown) extending from the rear portions of the main frames 12L, 12R obliquely rearward and upward, middle frames 17L, 17R (only the reference numeral 17L on the near side is shown) which connect intermediate points 16L, 16R (only the reference numeral 16L on the near side is shown) of the seat rails 14L, 14R and rear end portions of the main frames 12L, 12R, rail stays 18L, 18R (only the reference numeral 18L on the near side is shown) which connect between the upper portions of the middle frames 17L, 17R and the rear portions of the seat rails 14L, 14R, pivot plates 21L, 21R (only the reference numeral 21L on the near side is shown) being extended across the seat rails 14L, 14R and the middle frames 17L, 17R for supporting a pivot shaft 19, a link member 22 extending downward from the pivot plates 21L, 21R via the pivot shaft 19, a power unit 24 extending rearward via the link member 22 and a supporting shaft 23 and being served as a rear swing arm which is capable of swinging in the vertical direction, rear cushion units 25L, 25R (only the reference numeral 25L on the near side is shown) extending across the rear end portion of the power unit 24 and the seat rail 14L, a rear wheel 26 provided at a rear portion of the power unit 24, a rear wheel 27 attached to the rear wheel 26, a front seat 33 attached to the seat rails 14L, 14R as the components of a vehicle body frame 31 for allowing the driver to sit thereon, a rear seat 34 arranged at the rear of the front seat 33 for allowing the fellow passenger to sit thereon, a rear spoiler 35 for surrounding the periphery of the rear seat 34, a front fork 36 steerably attached to the head pipe 11 of rear portion, a front wheel 38 attached to the front fork 36 via a front wheel axle 37, and a steering handle 41 attached to the upper end portion of the front fork 36. The power unit 24 includes an engine 42.

A radiator unit 43 for cooling the engine 42 is arranged at the rear of the front wheel 38 and the front of the down frames 13L, 13R.

In the drawing, a reference numeral 45 designates a front disk brake unit, a reference numeral 46 designates a front disk plate, a reference numeral 47 designates an exhaust pipe extending from the power unit 24, a reference numeral 48 designates a muffler connected to a rear end portion of the exhaust pipe 47, a reference numeral 49 designates a side stand and a reference numeral 51 designates a main stand.

External members which cover members such as the frames or the power unit as described above and constitute the design of the vehicle will be described below.

The motorcycle 10 includes, from the front to the rear, a wind shield panel 52 as a wind shield during travel, a front cowl 53 provided continuously from the wind shield panel 52 for covering a front portion of the vehicle, front side covers 55L, 55R (only the reference numeral 55L on the near side is shown) arranged between the steering handle 41 and the front seat 33 for covering the sides of the vehicle from the front portion to the intermediate portion, step floors 56L, 56R (only the reference numeral 56L on the near side is shown) provided continuously from the front side covers 55L, 55R so as to extend downward to serve as the covers for covering the sides of the vehicle and for allowing a driver to place his/her feet, floor skirts 57L, 57R (only the reference numeral 57L on the near side is shown) provided continuously from the step floors 56L, 56R so as to extend downward for covering the lower portion of the sides of the vehicle and a rear side cover 58 provided so as to continue from the front side covers 55L, 55R and the step floors 56L, 56R so as to extend rearward for covering the sides of the vehicle from the intermediate portion to the rear portion thereof. In the drawing, a reference numeral 61 designates a front fender for covering the upper portion of the front wheel 38 and a reference numeral 62 designates a rear fender for covering the upper side of the rear wheel 27.

A sitting seat 54 includes the front seat 33 and the rear seat 34.

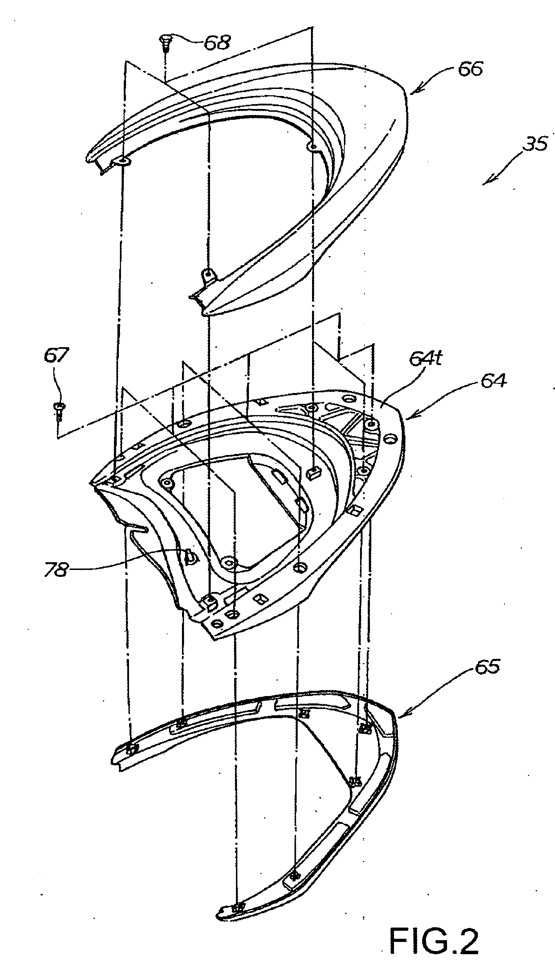

Fig. 2 is an exploded perspective view of a rear spoiler of a motorcycle according to the invention. The rear spoiler 35 mainly includes a rear spoiler base 64 formed of metal, a lower cover 65 for covering a lower surface of the rear spoiler base 64 and being formed of resin, and an upper cover 66 for covering an upper surface 64t of the rear spoiler base 64 and being formed of resin, and is formed by attaching the rear spoiler base 64 to the lower cover 65 and attaching the upper cover 66 on the rear spoiler base 64 from above the rear spoiler base 64.

The lower cover 65 is fixed to the rear spoiler base 64 via first fastening members 67 ... (...means that there are plurality of pieces), and the upper cover 66 is fixed to the rear spoiler base 64 via second fastening members 68 .... The second fastening member 68 is a shouldered screw bolt.

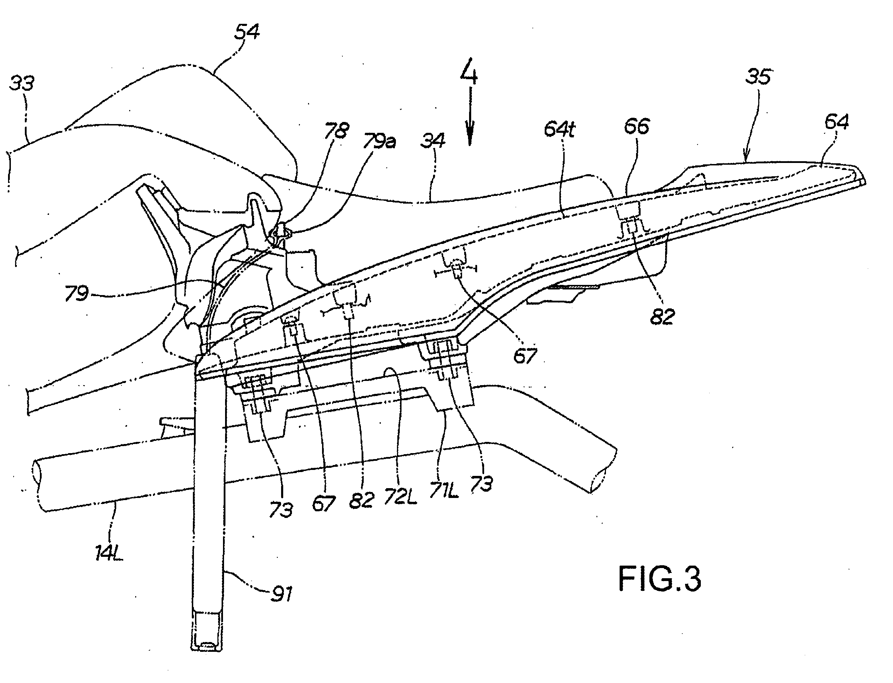

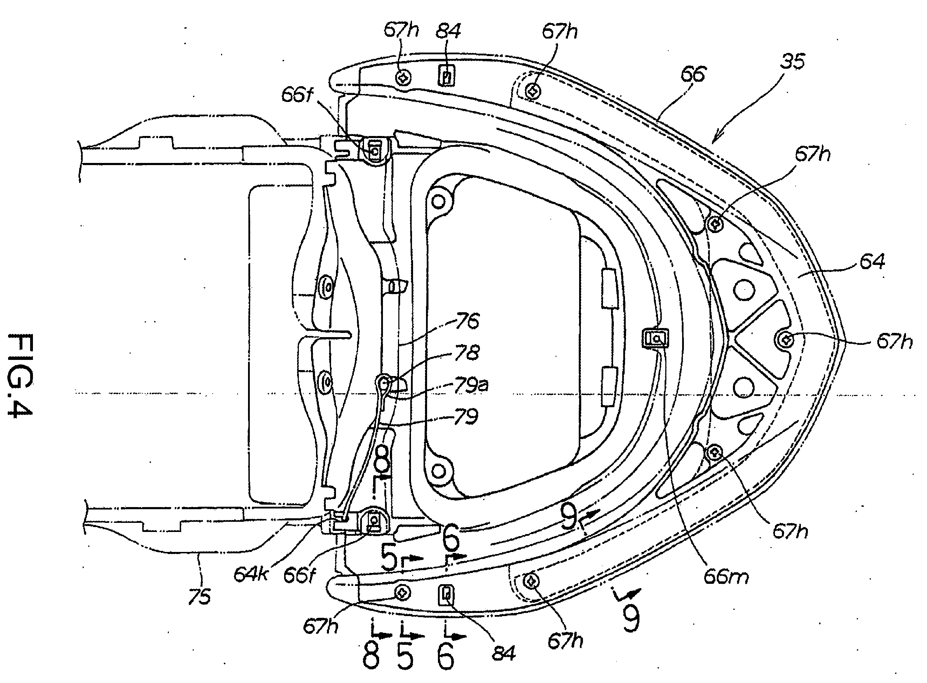

Fig. 3 is a side view of a rear spoiler of a motorcycle according to the invention and Fig. 4 is a drawing showing a state viewed in the direction of an arrow 4 in Fig. 3. Referring to Fig. 3 and Fig. 4, description will be given below.

Spoiler mounting brackets 71L, 71R (only the reference numeral 71L on the near side is shown) having an angular C-shape in cross-section on the rear portion of the seat rails 14L, 14R (only the reference numeral 14L on the near side is shown), and the rear spoiler 35 extends rearward from seat surfaces 72L, 72R (only the reference numeral 72L on the near side is shown) of the spoiler mounting brackets. The rear spoiler 35 is attached to the seat surfaces 72L, 72R of the spoiler mounting bracket via bolts 73....

The rear spoiler base 64, being formed of metal, extends substantially horizontally toward the rear of the vehicle, and the upper surface 64t of the rear spoiler base 64 is covered with the upper cover 66 formed of resin as described above.

Referring also to Fig. 1, since the rear spoiler base 64 formed of metal extends across the rear end portions of the left and right seat rails 14L, 14R, the rigidity of the vehicle body frame 31 is increased. By providing the rear spoiler base 64 formed of metal as described above on the rear end portions of the seat rails 14L, 14R, they may be utilized also as cross members, and hence reduction of weight of the vehicle body frame and reduction of the number of components of the same, which cannot be achieved when the rear spoiler formed of resin, are achieved.

In the drawing, a reference numeral 75 designates a storage box as a dough box attached to the seat rails 14L, 14R, a reference numeral 76 designates a seat catch cover provided on the front end portion of the rear spoiler base 64 for receiving a load of the sitting seat 54, a reference numeral 78 designates a projection used for fixing the personal commodity directly or the like, and a reference numeral 79 designates a cable used together with the projection 78 when suspending the personal commodity.

The front seat 33 (hereinafter, also referred to as "seat 33" simply) which constitutes the sitting seat 54 for allowing the rider to sit thereon is arranged at the front of the rear spoiler 35, and an upper end portion 66f of the upper cover 66 is arranged so as to overlap with the front seat 33 when viewing the vehicle from above, and the upper cover 66 is fixed to the rear spoiler base 64 at the upper end portion 66f of the upper cover 66 with the second fastening members 68... (...means that there are plurality of pieces, hereinafter).

Detailed mounting structure of the interior of the rear spoiler 35 will be described.

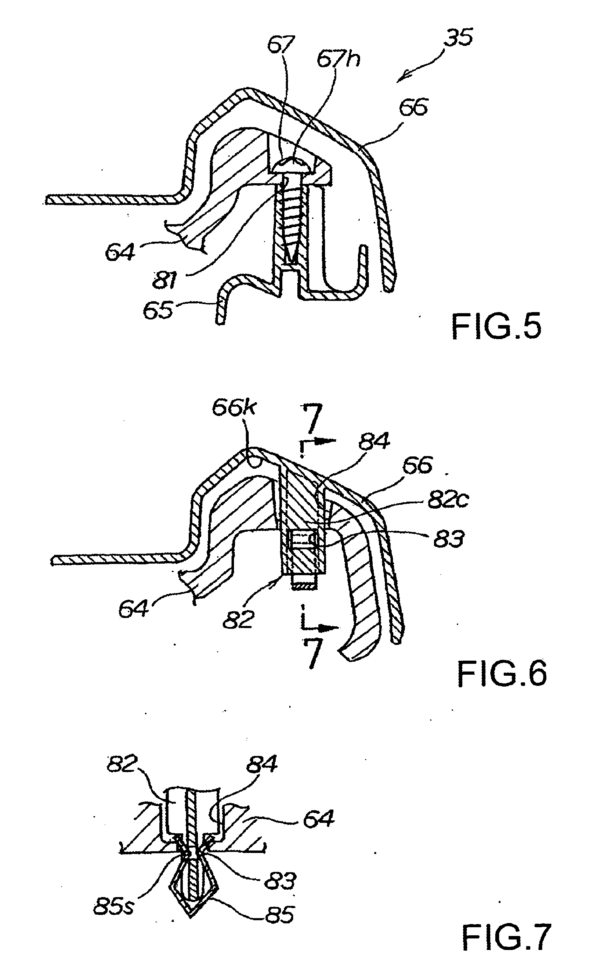

Fig. 5 is a cross-sectional view taken along the line 5-5 in Fig. 4. The lower cover 65 is fastened to the rear spoiler base 64 from above with a first fastening member 67 via a through hole 81 provided on the rear spoiler base 64, and the upper cover 66 is arranged so as to cover the first fastening member 67.

The lower cover 65 is fastened to the rear spoiler base 64 from above with the first fastening member 67 via the through hole 81. Since the upper cover 66 is arranged so as to cover the first fastening member 67, a head portion 67h of the first fastening member is not exposed upward from the vehicle, so that the appearance of the rear spoiler 35 is prevented from being impaired.

Since the first fastening member 67 is fastened to the lower cover 65 from above, good workability is achieved in terms of fastening and hence the productivity in terms of assembly is not impaired even though it is the rear spoiler 35 having a plurality of members assembled thereto.

Returning back to Fig. 4, the fastening structure of other first fastening members 67... is not much different from the fastening structure described above. Therefore, the head portions 67h... of the first fastening members are not exposed upward from the vehicle, so that the appearance of the rear spoiler 35 is prevented from being impaired. Since the first fastening members 67... are adapted to be tightened from above, the productivity in terms of assembly is improved.

Fig. 6 is a cross-sectional view taken along the line 6-6 in Fig. 4, and Fig. 7 is a cross-sectional view taken along the line 7-7 in Fig. 6. Referring now to Fig. 6 and Fig. 7, description will be given below.

An engaging projection 82 is projected downward from a lower surface 66k of the upper cover, and a rectangular stop hole 83 is formed in an intermediate portion 82c of the engaging projection 82.

The rear spoiler base 64 is formed with an engaging hole 84 so as to engage the engaging projection 82, and a clip member 85 fitting to the stop hole 83 and holding the engaging projection 82 is attached to the engaging hole 84. When the engaging projection 82 engages the engaging hole 84, a narrowed portion 85s of the clip member 85 fits the stop hole 83.

The clip member 85 is a metallic clip, but a resin clip is also applicable.

Returning back to Fig. 4, the engaging structure of the engaging projections 82... other than that shown above for engaging the upper cover 66 with the rear spoiler base 64 is not much different. Therefore, the upper cover 66 may be fixed firmly to the entire rear spoiler base 64.

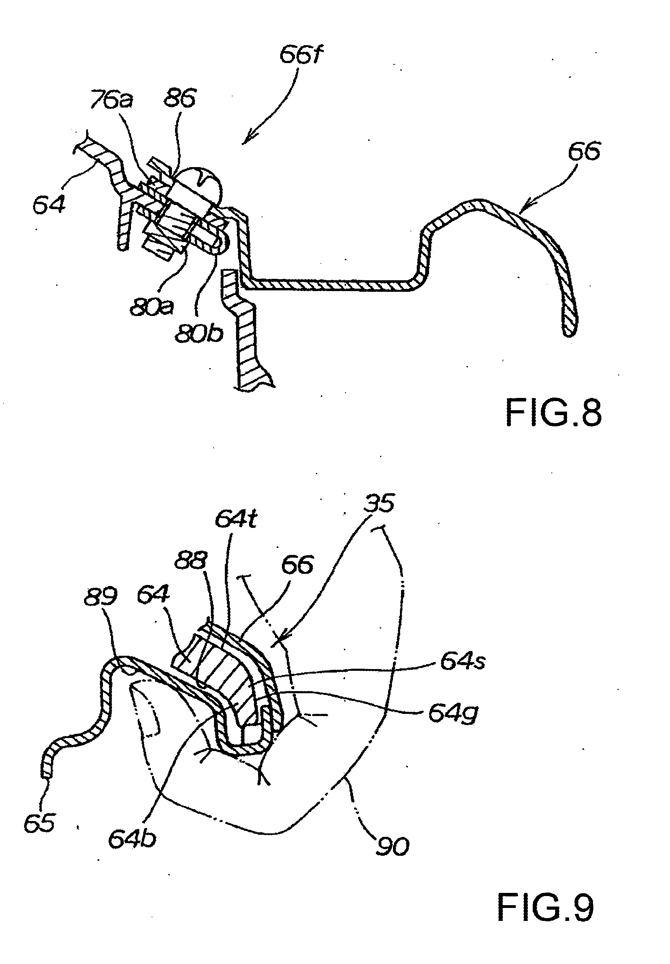

Fig. 8 is a cross-sectional view taken along the line 8-8 in Fig. 4 and, referring also to Fig. 3 and Fig. 4, description will be given below.

A mounting seat 86 is provided at the upper end portion 66f of the upper cover, an end portion 76a of the seat catch cover is placed on the mounting seat 86, the upper cover 66 is placed on the end portion 76a of the seat catch cover, and the upper cover 66 and the rear spoiler base 64 are fixed by the second fastening member 68.

More specifically, the upper cover 66 is fixed to the rear spoiler base 64 by fixing a shouldered screw 80c to a metallic clip 80b having a nut 80a welded thereto. Therefore, it is not necessary to form a female screw on the rear spoiler base 64. Furthermore, by using the metallic clip 80b having the nut 80a as a multipurpose member welded thereto, the upper cover 66 is reliably fixed while reducing the number of steps and the cost for machining the rear spoiler base 64.

Returning back to Fig. 4, the fastening structure of other second fastening members 68... is not much different from the fastening structure shown above, and hence description will be omitted.

The upper end portion 66f of the upper cover covered with the front seat 33 is attached to the rear spoiler base 64 via the second fastening member 68, 68. Since the upper end portion 66f of the upper cover is covered with the sitting seat 54, the second fastening members 68, 68 provided on the upper surface of the upper cover 66 are not exposed outward, so that the appearance of the rear spoiler 35 is prevented from being impaired.

Therefore, a high level of the appearance of the rear spoiler 35 is maintained.

In the same manner, since the second fastening member 68 is arranged at an intermediate point 66m of the upper cover and the second fastening member 68 is covered with the sitting seat 54, the second fastening member 68 provided on the upper surface of the upper cover 66 is not exposed outward, so that the appearance of the rear spoiler 35 is prevented from being impaired.

Fig. 9 is a cross-sectional view taken along the line 9-9 in Fig. 4 and, referring also Fig. 3 and Fig. 4, description will be given below. The rear spoiler base 64 is formed with a recess 88 opening downward in the vicinity of an outer peripheral portion 64g thereof, and the lower cover 65 is formed with a groove 89 being depressed toward the side of the rear spoiler base 64 at a portion corresponding to the recess 88 and allowing the rider or the passenger to insert his/her fingers.

The rear spoiler 35 includes the rear spoiler base 64 formed of metal and the upper and lower covers 66, 65 formed of resin which covers the upper side and the lower side of the rear spoiler base 64. In other words, the rear spoiler 35 is configured by assembling a plurality of members. Therefore, the height of the rear spoiler 35 is likely to increase due to the structure in which the members are assembled.

In this point, according to the invention, the lower cover 65 and the upper cover 66 extend to the outer peripheral portion 64g of the rear spoiler base 64, the upper cover 66 and the lower cover 65 are joined on the outer peripheral portion 64g, and an upper surface 64t, a lower surface 64b and an outer side 64s of the rear spoiler base are covered. Furthermore, the rear spoiler base 64 is extended substantially horizontally toward the rear of the vehicle.

The spoiler 35 is formed by assembling a plurality of members and the rear spoiler base 64 extends substantially horizontally toward the rear of the vehicle. Therefore, the vertical length as the height of the rear spoiler 35 may be restrained to be short. When the vertical length of the rear spoiler 35 is restrained to be short, downsizing of the rear spoiler 35 is easily achieved.

Since the rear spoiler base 64 is formed of metal, sufficient strength as the load carrying platform is achieved. The rear spoiler base 64 is, for example, aluminum casting product.

Furthermore, by covering the rear spoiler base 64 including the outer side 64s of the rear spoiler base 64 with the upper cover 66 and the lower cover 65 extending to the outer peripheral portion 64g of the rear spoiler base 64, the rear spoiler base 64 may be covered completely when viewing the rear spoiler base 64 from the outside. Therefore, the sense of integrity as the rear spoiler 35 is enhanced, so that the appearance is improved.

Furthermore, since the rear spoiler base 64 formed of metal is covered with the upper and lower cover 66, 65 formed of resin, the process of finishing the surface of the rear spoiler base 64 by polishing or coating is not necessary. Although the process of coating or the like on the upper and lower covers 66, 65 is necessary, the cost required for the surface finishing for resin may be lower in comparison with the cost required for the surface finishing process for metal. Therefore, increase in cost for the surface finishing process may be restrained.

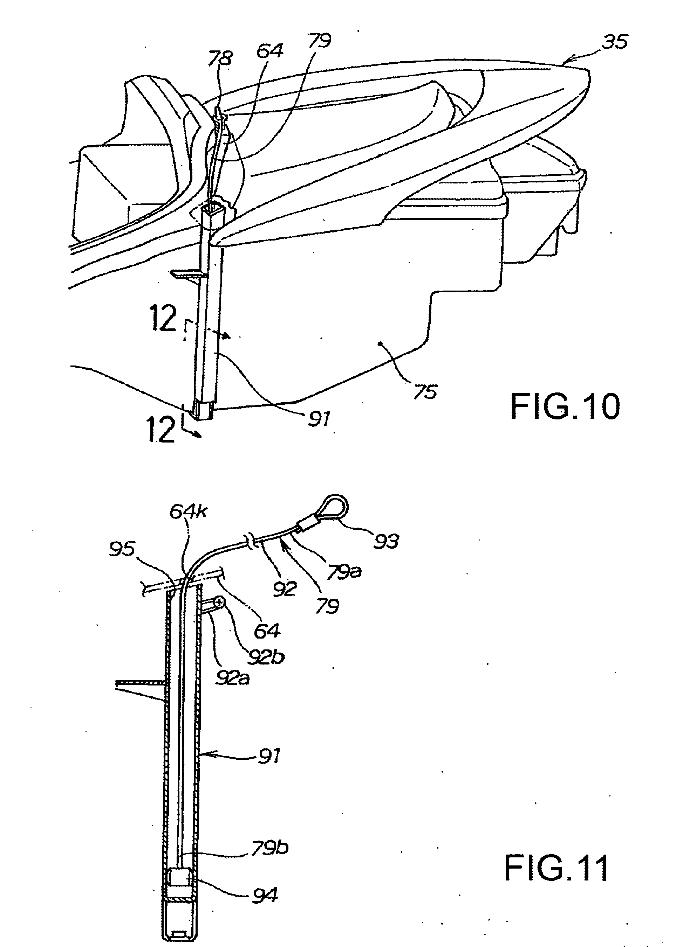

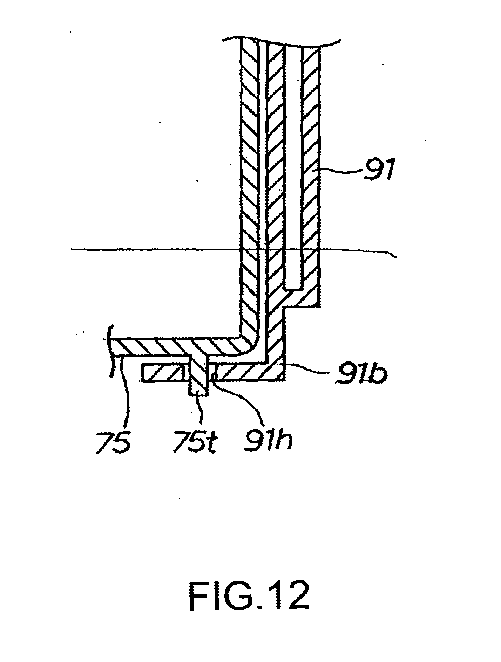

Fig. 10 is a perspective view for explaining a personal commodity suspending mechanism of the motorcycle according to the invention, Fig. 11 is an explanatory drawing of the cable and the cable storage provided in the personal commodity suspending mechanism, and Fig. 12 is a cross-sectional view taken along the line 12-12 in Fig. 10. Referring now to Fig. 10 to Fig. 12, description will be given below.

The rear spoiler base 64 formed of metal is provided with the projection 78 for fixing the cable 79 for fixing the personal commodity directly or for suspending the personal commodity. The projection 78 is arranged below the seat (reference numeral 54 in Fig. 3) when viewed from above the vehicle.

A cable storage member 91 having a rectangular cross-section and assuming an elongated box-shape is attached to the left side surface of the storage box 75 in the vertical direction, and the cable 79 is stored in the cable storage member 91. Using the cable 79, for example, the personal commodity such as a helmet may be suspended.

The mounting structure of the cable storage member 91 provided separately from the storage box 75 and attached to the storage box 75 will be described in detail.

A projection 75t is provided on the lower portion of the storage box 75 so as to project downward. The cable storage member 91 includes an L-shaped bracket unit 91b extended therefrom and a fitting hole 91h is provided on a horizontal portion of the bracket unit 91b. The fitting hole 91h fits the projection 75t.

The cable storage member 91 is provided with an upper bracket 92a on the upper portion thereof, and the upper bracket 92a is attached to the upper portion of the storage box 75 by a screw 92b.

When the cable storage member 91 is attached to the storage box 75, the fitting hole 91h of the bracket unit 91b is fitted to the projection 75t of the storage box 75, and then the cable storage member 91 is attached to the storage box 75 with the screw 92b. In this configuration, the cable storage member 91 is attachable to the storage box 75 only with a single screw 92b.

A hooking portion 93 formed into a ring shape for hooking the inside thereof on the projection 78 is formed at one end 79a of the cable 79, and a stopper member 94 for preventing the cable 79 from getting out from and coming off the cable storage member 91 by more than a predetermined length when an attempt is made to extend the cable by a predetermined length is attached to the other end 79b of the cable 79.

A notch 64k provided on the rear spoiler base 64 for allowing only the cable 79 to pass through is arranged above an exit 95 of the cable storage member 91. In other words, the upper side of the cable storage member 91 is covered with the rear spoiler base 64, and part of the rear spoiler base 64 is formed with the notch 64k, and the notch 64k is arranged near and above the cable exit 95. Therefore, even when an attempt is made to pull out the cable 79 by more than a predetermined length, the stopper member 94 provided at the other end 79b of the cable 79 comes into abutment with the notch 64k to retain the cable 79, so that the cable 79 does not get out from the cable storage member 91.

Referring also to Fig. 3, the rear spoiler base 64 is provided with the projection 78 for hooking the one end 79a of the cable 79 for directly fixing the personal commodity or for suspending the personal commodity, and the projection 78 is arranged below the sitting seat 54 when viewing the vehicle from above and the other end 79b of the cable 79 is fixed to the vehicle frame side.

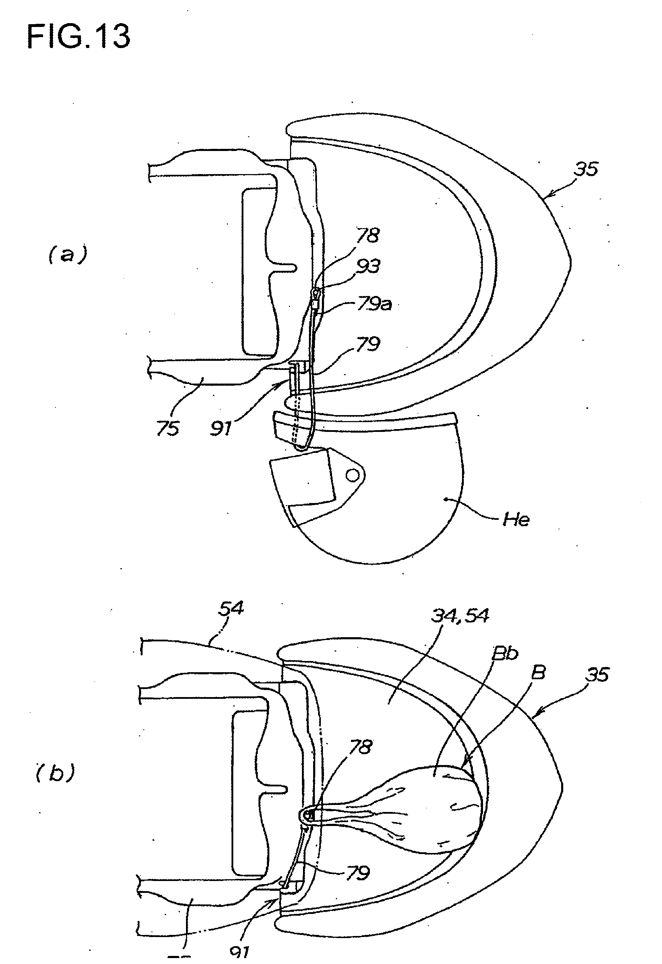

Fig. 13 is an operational drawing for explaining the operation of Fig. 10.

The drawing (a) is an operational drawing illustrating a state of hooking a helmet He on the cable 79. The cable 79 is pulled from the cable storage member 91, the cable 79 is passed thorough a jaw portion of the helmet He, and the hooking portion 93 provided at the one end 79a of the cable is hooked on the projection 78. Then, the sitting seat 54 is closed so that the helmet He is retained on the vehicle.

The length of the cable 79 does not have to be very long as long as it can be placed above the sitting seat 54 in a shortened state. Two helmets He may also be fixed in a juxtaposed manner by passing the cable 79 through the ring provided at the jaw straps of the helmets He.

In other words, by combining the cable 79 and the projection 78 for fixing one end 79a of the cable and using the cable 79 as a helmet hook for example, the convenience of the motorcycle may be enhanced significantly without impairing the appearance of the vehicle.

In the drawing (b), a bag B with handgrips is directly hooked on the projection 78, and a body portion Bb of the bag B is arranged on the sitting seat 54.

Since the projection 78 for fixing the cable 79 for suspending the personal commodity is provided under the seat 54, the projection 78 may be provided without becoming highly visible while enabling provision of the projection 78 with a high level of rigidity. Therefore, the convenience of the motorcycle may be enhanced significantly without impairing the appearance of the vehicle.

The operation of the rear spoiler provided as described above will be described below.

Referring now to Fig. 3, Fig. 4 and Fig. 9, the recess 88 for allowing the rider or the passenger to grip is formed in the vicinity of the outer peripheral portion 64g of the rear spoiler base, and the lower cover 65 is formed with a groove 89 depressed toward the rear spoiler base 64 at a position corresponding to the recess 88.

Since the recess 88 for gripping is formed in the vicinity of the outer peripheral portion 64g of the rear spoiler base and the lower cover 65, by forming the groove 89 on the rear spoiler base 64 and the lower cover 65 for allowing the rider or the like to insert his/her fingers 90 easily, the rider or the like is able to grip the rear spoiler 35 easily by inserting a finger 90 even when the size or the thickness of the grip is increased. Therefore, in the motorcycle 10, the easy-to-grip rear spoiler 35 is obtained.

### Main Reference Numerals and Signs

10: motorcycle
31: vehicle body frame
35: rear spoiler
54: seat
64: rear spoiler base
64b: lower surface of rear spoiler base
64t: upper surface of rear spoiler base
64g: outer peripheral portion of rear spoiler base
64s: outer side of rear spoiler base
65: lower cover
66: upper cover
66f: upper end portion of upper cover
67: first fastening member
68: second fastening member
78: projection
79a: one end of cable
79b: other end of cable
81: through hole
82: engaging projection
84: engaging hole
88: recess
89: groove

## Claims

1. A motorcycle (10) comprising a rear spoiler (35) extending rearward from a rear portion of a vehicle body frame (31) and including a rear spoiler base (64) which extends substantially horizontally toward the rear of the vehicle, the near spoiler base (64) is attached to the vehicle body frame (31) and formed with a recess (88) opening downward in the vicinity of an outer periphery thereof; wherein the rear spoiler (35) further includes a lower cover (65) so as to cover a lower surface (64b) of the rear spoiler base (64);
**characterised in that** said lower cover (65) is formed of resin, with a groove (89) which is depressed toward the side of the rear spoiler base (64) at a portion corresponding to the recess (88), whereby a rider or a passenger is allowed to insert his/her fingers in said groove (89), wherein the rear spoiler base (64) is formed of metal, an upper surface (64t) of the rear spoiler base (64) is covered with an upper cover (66) formed of resin, the lower cover (65) and the upper cover (66) extend to an outer peripheral portion (64g) of the rear spoiler base (64), the upper cover (66) and the lower cover (65) are joined in the vicinity of the outer peripheral portion (64g) so that the upper surface (64t), and the lower surface (64b) and the outer peripheral portion (64g) of the rear spoiler base (64) are covered.

2. The motorcycle according to Claim 1, **characterized in that** the lower cover (65) is fastened with a first fastening member (67) from above via a through hole (81) provided on the rear spoiler base (64), and the upper cover (66) is arranged so as to cover the first fastening member (67).

3. The motorcycle according to Claim 1 or Claim 2, **characterized in that** a seat (54) on which the rider is seated is arranged forwardly of the rear spoiler (35), and a front end portion of the upper cover (66) is arranged so as to overlap with the seat (54) when viewing the vehicle (10) from above, the upper cover (66) is fixed to the rear spoiler base (64) with a second fastening member (68) at the front end portion thereof, an engaging projection (82) provided on a lower surface of the upper cover (66) is arranged so as not to overlap with the seat (54) when viewing the vehicle (10) from above and is engaged with an engaging hole (84) provided on the rear spoiler base (64).

4. The motorcycle according to Claim 3, **characterized in that** the rear spoiler base (64) is provided with a projection (78) for hooking an end (79a) of a cable (79) usable for directly fixing a personal commodity or suspending the personal commodity, the projection (78) is arranged below the seat (54) when viewing the vehicle (10) from above, and the other end (79b) of the cable (79) is fixed to a vehicle body frame side.

## Patentansprüche

1. Motorrad (10), das einen Heckspoiler (35) aufweist, der sich von einem hinteren Abschnitt eines Fahrzeugkarosserierahmens (31) nach hinten erstreckt und der eine Heckspoilerbasis (64) umfasst, die sich im Wesentlichen horizontal in Richtung des Hecks des Fahrzeugs erstreckt, wobei die Heckspoilerbasis (64) an dem Fahrzeugkarosserierahmen (31) befestigt ist und mit einer Vertiefung (88) versehen ist, die sich in der Nachbarschaft ihres Außenumfangs nach unten öffnet; wobei der Heckspoiler (35) ferner eine untere Abdeckung (65) umfasst, um eine untere Oberfläche (64b) der Heckspoilerbasis (64) zu bedecken,
**dadurch gekennzeichnet, dass** die untere Abdeckung (65) aus Harz mit einer Rille (89) ausgebildet ist, die in Richtung der Seite der Heckspoilerbasis (64) an einem der Vertiefung (88) entsprechenden Abschnitt vertieft ist, wobei es einem Fahrer oder einem Fahrgast ermöglicht ist, seine Finger in die Rille (89) einzusetzen, wobei die Heckspoilerbasis (64) aus Metall ausgebildet ist, eine obere Oberfläche (64t) der Heckspoilerbasis (64) mit einer aus Harz ausgebildeten oberen Abdeckung (66) bedeckt ist, die untere Abdeckung (65) und die obere Abdeckung (66) sich zu einem Außenumfangsabschnitt (64g) der Heckspoilerbasis (64) erstrecken, wobei die obere Abdeckung (66) und die untere Abdeckung (65) in der Nachbarschaft des Außenumfangsabschnitts (64g) verbunden sind, so dass die obere Oberfläche (64t) und die untere Oberfläche (64b) und der Außenumfangsabschnitt (64g) der Heckspoilerbasis (64) bedeckt sind.

2. Motorrad nach Anspruch 1, **dadurch gekennzeichnet, dass** die untere Abdeckung (65) von oben über ein Durchgangsloch (81), das auf der Heckspoilerbasis (64) bereitgestellt ist, mit einem ersten Befestigungselement (67) befestigt ist und die obere Abdeckung (66) derart angeordnet ist, dass sie das erste Befestigungselement (67) bedeckt.

3. Motorrad nach Anspruch 1 oder Anspruch 2, **dadurch gekennzeichnet, dass** ein Sitz (54), auf dem der Fahrer sitzt, vor dem Heckspoiler (35) angeordnet ist, und ein vorderer Endabschnitt der oberen Abdeckung derart angeordnet ist, dass er sich mit dem Sitz (54) überlappt, wenn das Fahrzeug (10) von oben betrachtet wird, wobei die obere Abdeckung (66) mit einem zweiten Befestigungselement (68) an ihrem vorderen Endabschnitt an der Heckspoilerbasis (64) befestigt ist, ein Eingreifvorsprung (82) auf einer unteren Oberfläche der oberen Abdeckung (66) derart angeordnet ist, dass er sich nicht mit dem Sitz (54) überlappt, wenn das Fahrzeug (10) von oben betrachtet wird, und mit einem auf der Heckspoilerbasis (64) bereitgestellten Eingreifloch (84) in Eingriff ist.

4. Motorrad nach Anspruch 3, **dadurch gekennzeichnet, dass** die Heckspoilerbasis (64) mit einem Vorsprung (78) zum Einhaken eines Endes (79a) eines Seils (79) versehen ist, das verwendbar ist, um ein persönliches Gut direkt zu befestigen oder das persönliche Gut aufzuhängen, wobei der Vorsprung (78) unter dem Sitz (54) angeordnet ist, wenn das Fahrzeug (10) von oben betrachtet wird, und das andere Ende (79b) des Seils (79) an einer Fahrzeugkarosserierahmenseite befestigt ist.

## Revendications

1. Motocycle (10) comprenant un becquet arrière (35) s'étendant vers l'arrière depuis une portion arrière d'une ossature de caisse de véhicule (31) et incluant une base de becquet arrière (64) qui s'étend sensiblement horizontalement vers l'arrière du véhicule, la base de becquet arrière étant fixée à l'ossature de caisse de véhicule (31) et formée avec un évidement (88) s'ouvrant vers le bas au voisinage d'une périphérie externe de celui-ci ; dans lequel le becquet arrière (35) inclut en outre un carénage inférieur (65) de façon à couvrir une surface inférieure (64b) de la base de becquet arrière (64) ;
**caractérisé en ce que** ledit carénage inférieur (65) est formé d'une résine, avec une rainure (89) qui est enfoncée vers le côté de la base de becquet arrière (64) au niveau d'une portion correspondant à l'évidement (88), moyennant quoi un motocycliste ou un passager peut insérer ses doigts dans ladite rainure (89), où la base de becquet arrière (64) est formée de métal, une surface supérieure (64t) de la base de becquet arrière (64) est couverte avec un carénage supérieur (66) formé de résine, le carénage inférieur (65) et le carénage supérieur (66) s'étendent vers une portion périphérique externe (64g) de la base de becquet arrière (64), le carénage supérieur (66) et le carénage inférieur (65) sont joints au voisinage de la portion périphérique extérieure (64g) de sorte que la surface supérieure (64t), et la surface inférieure (64b) et la portion périphérique extérieure (64g) de la base de becquet arrière (64) sont couvertes.

2. Motocycle selon la revendication 1, **caractérisé en ce que** le carénage inférieur (65) est arrimé avec un premier organe d'arrimage (67) depuis le dessus via un trou traversant (81) disposé sur la base de becquet arrière (64), et le carénage supérieur (66) est agencé de façon à couvrir le premier organe d'arrimage (67).

3. Motocycle selon la revendication 1 ou la revendication 2, **caractérisé en ce qu'**une selle (54) sur laquelle le motocycliste est assis est agencée vers l'avant du becquet arrière (35), et une portion d'extrémité avant du carénage supérieur (66) est agencée de façon à se chevaucher avec la selle (54) lorsque l'on regarde le véhicule (10) depuis le dessus, le carénage supérieur (66) est fixé à la base de becquet arrière (64) avec un second organe d'arrimage (68) au niveau de sa portion d'extrémité avant, une saillie de mise en prise (82) disposée sur une surface inférieure du carénage supérieur (66) est agencée de façon à ne pas se chevaucher avec la selle (54) lorsque l'on regarde le véhicule (10) depuis le dessus et est mise en prise avec un trou de mise en prise (84) disposé dans la base de becquet arrière (64).

4. Motocycle selon la revendication 3, **caractérisé en ce que** la base de becquet arrière (64) est pourvue d'une saillie (78) permettant d'accrocher une extrémité (79a) d'un câble (79) utilisable pour fixer directement un produit personnel ou suspendre le produit personnel, la saillie (78) est agencée en dessous de la selle (54) lorsque l'on regarde le véhicule (10) depuis le dessus, et l'autre extrémité (79b) du câble (79) est fixée à un côté de l'ossature de caisse de véhicule.
